Europäisches Patentamt

European Patent Office

Office européen des brevets

(11) Publication number : **0 626 136 A2**

(12) **EUROPEAN PATENT APPLICATION**

(21) Application number : 94303750.7

(22) Date of filing : 25.05.94

(51) Int. Cl.[5] : **A23C 13/14**

(30) Priority : 27.05.93 US 68064

(43) Date of publication of application :
30.11.94 Bulletin 94/48

(84) Designated Contracting States :
**BE DE DK FR GB IE IT NL SE**

(71) Applicant : **GALLOWAY COMPANY**
**601 South Commercial Street**
**Neenah Wisconsin (US)**

(72) Inventor : **Galloway, Timothy E.**
**1499 Cowling Bay Road**
**Neenah, Wisconsin 54956 (US)**

Inventor : **Nelson, Mark I.**
**807 West 4th Avenue**
**Oshkosh, Wisconsin 54901 (US)**
Inventor : **Wiebusch, Nancy Margaret V.H.**
**118 Cherry Court**
**Appleton, Wisconsin 54915 (US)**
Inventor : **Galloway, Tod R.**
**1348 Cedar Street**
**Appleton, Wisconsin 54914 (US)**
Inventor : **Taplin, Kenneth**
**1536 North Street**
**Neenah, Wisconsin 54956 (US)**

(74) Representative : **Harvey, David Gareth et al**
**Graham Watt & Co.**
**Riverhead**
**Sevenoaks Kent TN13 2BN (GB)**

(54) Condensed sweetened dairy concentrates, and methods of making them.

(57)    Methods of making shelf stable condensed sweetened dairy concentrates, and thereby preserving the dairy fat while retaining the flavor and texture characteristics of fresh dairy products, involve mixing together fat and non fat milk solids including a fresh dairy component, and sugar, to make a blend, evaporating the blend to at least 70% total solids, and recovering the product as the dairy concentrate. The concentrates so made comprise, in combinations, about 15% to about 37% fat, 4% to about 17% non fat milk solids, and enough sugar to avoid deleterious effects related to growth of pathogenic organisms based on activity internal to the concentrate. Sandiness due to lactose crystallization at above 7% non fat milk solids can be avoided by seeding the evaporated blend. The concentrate can be used in a variety of applications, including the production of frozen dairy desert mixes made by adding sugar and non fat milk solids as desired to the concentrate. Typically, all the fat is provided by the concentrate, such that no other fat is added in making the mix, the mix being the formula ultimately consumed by a consumer.

This application relates to condensed sweetened dairy concentrates and methods for making such concentrates.

As used herein, "fresh non fat milk solids" includes any source, or combination of sources, of non fat milk solids in which the milk protein has not been degraded by drying. Thus, the "fresh" designation includes, but is not exhausted by, fresh whole milk, fresh skim milk, condensed skim milk, and condensed whole milk. It does not include non fat dry milk.

As used herein, "fresh dairy fat" means any dairy fat whose flavor and texture have not been degraded by previous processing. Thus, fresh dairy fat includes fresh cream and sweetened condensed whole milk.

As used herein "fresh dairy components" includes any milk product or extract whose flavor and/or texture properties have not been degraded through previous processing. It includes either dairy fat or non fat milk solids, or both.

As used herein "fresh dairy products" means fresh whole milk and products extracted from fresh whole milk without going through an evaporative or other process that extracts large quantities of water. We do include herein pasteurized products.

As used herein, "fresh whole milk" means fresh milk as received from the dairy farm.

As used herein, "fresh milk" means either fresh whole milk or such milk after the cream has been separated as by a centrifuge, namely the product commonly known as fresh skim milk.

As used herein, "fresh cream" means the cream as separated from fresh whole milk.

As used herein, "shelf stable," means that the product has an extended shelf life of at least 90 days at ambient conditions with no deleterious growth of organisms based on activity internal to the product. "Shelf stable" thus makes no statement with respect to mold or yeast growth, which depend on e.g. air as an external input.

As used herein, all percents are percent by weight, unless otherwise indicated.

The food industry, especially in baking, in candy making, and in making frozen dairy desert mixes, uses a large amount of fat in combinations with non fat milk solids (NFMS). The food industry thus requires a large quantity of dairy products such as milk and preferably cream, as raw materials, to be available at a uniform rate of supply.

The requirement for a uniform rate of supply of dairy products as raw materials for use in the food industry is contrasted with a rate of supply coming from the farm that varies seasonally according to farm output of dairy products.

Supply of fresh dairy products as raw materials for industrial use also varies geographically. Only a few countries, the USA and New Zealand being examples, have a consistently adequate supply of dairy products to meet industry demand. Many countries experience either chronic or periodic shortages, and must either import dairy products or not fill part of the potential demand for such products.

In order to satisfy both the uniformity of industrial demand for dairy products, and the geographically-related shortages, it is desirable to be able to store dairy products for substantial periods of time, and to ship them extended distances economically.

The primary dairy product received from the dairy producer/farm is whole milk. Whole milk is known to be inherently perishable.

It is known to process whole milk to make certain shelf stable products for later industrial or consumer use. This invention focuses on products intended for later industrial use.

In most cases, the products made with whole milk include much less water than whole milk, whereby economics of shipping are obtained. Examples of such shelf stable, lower water content, products include non fat powdered milk, sweetened condensed skim milk, sweetened condensed whole milk, plastic cream, butter, and butter oil.

This invention is directed, in general toward providing a condensed sweetened dairy concentrate that is shelf stable at ambient temperatures, and is high in fat content, yet can be reconstituted to have flavor and texture very similar to products produced using unevaporated dairy products as received from the farm, allowing for centrifuge or the like separation processes.

It is known that the primary factor in obtaining pleasing flavor in a food product which uses both a significant amount of fat and a significant amount of NFMS resides in the type and quality of fat used. In many societies, the preferred fat is fresh dairy fat.

Fresh dairy fat is contrasted with the shelf stable converted fat present in e.g. plastic cream, butter, and butter oil. In the process of being converted from fresh dairy fat, which is perishable, into the respective above recited shelf stable products, the fat undergoes irreversible changes in both flavor and texture. Dairy fat products having the changed flavor and texture are generally judged inferior in flavor and/or texture when used as ingredients in certain types of food products, as compared to similar food products made with fresh (unchanged) dairy fat. This flavor and texture preference for fresh dairy fat (e.g. cream) is especially pronounced in dairy deserts, such as regular and premium ice cream, soft serve frozen desert, and milk shakes.

So long as there is an adequate supply of fresh dairy cream available to the manufacturer of the frozen desert mix, fresh cream is preferred both because it is less expensive and because it provides the best flavor and texture. But in many parts of the world there is an inadequate supply of fresh cream, whereby the desert mix manufacturer must substitute another material for the fat in fresh dairy cream.

A suitable cream substitute will have a weight ratio of fat/non fat milk solids, and a weight ratio of fat/sugar, at least as great as the corresponding ratios in the desert mix, such that the cream substitute can preferably supply the entire amount of fat required by the desert mix formula without exceeding the required amount of NFMS or the required amount of sugar. To the extent additional sugar or NFMS are needed in the desert mix, these ingredients are readily available separately, essentially anywhere in the world, and can be added by the desert mix manufacturer.

Typical weight ratios for dairy desert mixes are shown in Table 1.

Table 1

|  | Typical Fat NFMS | Typical Fat Sugar |
|---|---|---|
| Milk Shake | 0.30/1 | 0.21/1 |
| Soft Serve | 0.39/1 | 0.33/1 |
| Ice Cream | 0.83/1 | 0.67/1 |
| Premium Ice Cream | 1.6/1 | 1/1 |

The weight ratios of fat/non fat milk solids, and fat/sugar, of the several shelf stable dairy products which are presently commercially available are generally illustrated in Table 2.

Table 2

|  | Typical Fat NFMS | Typical Fat Sugar |
|---|---|---|
| Non fat powdered milk | nil | NA |
| Sweetened condensed skim milk | negligible | negligible |
| Sweetened condensed whole milk | 0.33/1 | 0.20/1 |
| Plastic cream | 32/1 | NA |
| Butter | over 100/1 | NA |
| Butter oil | over 100/1 | NA |

Referring to Tables 1 and 2, of the above products, only plastic cream, butter, and butter oil have enough fat to supply all the fat needed in dairy desert mixes other than milk shakes. But each of these products suffers a defect in either flavor or texture, or both, when compared to fresh cream. These products are thus less desirable than fresh cream because of their inferior performance. Accordingly, none of the above products satisfies the requirement for a high quality substitute for fresh cream in certain food products, namely (1) enough fat to supply all the fat needed in all common dairy desert mixes, and (2) good flavor and texture.

As a result, a dairy desert mix manufacturer in a geographic location where fresh cream is not readily available, or at a season when fresh cream is not available, does not have available a good product to select as a substitute raw material in place of fresh cream. Fresh cream can, in some instances, be shipped in (e.g. imported), but the combination of the short shelf life of fresh cream, and the high cost of appropriate transport (e.g. air freight) of such a high water content product, in view of its short shelf life, usually makes it impractical to import fresh cream or fresh milk.

A secondary flavor consideration in food products is that fresh NFMS are somewhat preferred over dry milk solids in some food products because the milk proteins are irreversibly denatured when they are dried in the making of powdered milk. These denatured milk proteins are considered inferior in flavor to fresh non fat milk solids. They also suffer from having a lesser ability to bind up water than do milk solids which have never been dried. So fresh non fat milk solids are preferred, both for improved flavor, and for greater ability to bind water.

Non fat milk solids serves two purposes in a dairy concentrate. First, it replaces water, thus reducing the amount of sugar needed as preservative. Second, it operates as an emulsifier, holding the fat uniformly distributed in the water.

United States Patents 2,982,626 to Tamsma; and 2,959,485 to Bell and Tamsma; address the problem of supplying adequate fat in a cream substitute. Tamsma '626 teaches mixing together very heavy cream (60% - 70% fat) with non fat dry milk and sugar, and heat treating the resulting mixture to make a sweetened cream concentrate. In Bell and Tamsma '485, the inventors acknowledge that the Tamsma '626 teaching is defective because the '626 cream concentrate becomes "sandy" under certain conditions. Bell '485 teaches overcoming the "sandy" characteristic by (1) limiting the NFMS content to less than 8% by weight, though a minimum of 6% is required, and (2) increasing the viscosity of the concentrate from 5000 centipoise to 25,000 centipoise. Bell acknowledges that his process does have a "minor effect on the flavor." The increased viscosity, of course, makes the concentrate more difficult to handle. The narrow range of the allowable amount of NFMS taught by Bell et al severely restricts versatility in formulating both the concentrate and the ultimate (e.g. ice cream mix) product.

Setting aside, for the moment, the minor inferior flavor acknowledged in Bell, the Bell and Tamsma teachings are further defective in that they cannot be practically applied. Bell gives examples with fresh cream only as cream having 65% fat. Tamsma teaches cream having 60%, 65%, and 70% fat. The 60% - 70% cream used in the Bell et al and Tamsma examples is not a generally available raw material in the dairy processing industry. Even if it were available, it could not be practically used. For example, if it were shipped to the concentrate manufacturer hot, it would quickly turn rancid. If it were cooled before shipping, to extend its useful (shelf) life, it would undergo the irreversible flavor and/or texture changes known to occur in such products as plastic cream, butter, and butter oil upon agglomeration of the fat. Thus, the cream used by Bell as his raw material is not generally available as an item of commerce, is not likely to become generally available, and if it were to become generally available, the contained fat would be so agglomerated that it would not meet the needs of the frozen desert mix manufacturer. Its only utility is for immediate use by the manufacturer of the cream, in a vertically integrated manufacturing operation. The dairy industry is not generally so vertically integrated.

What is needed is a condensed sweetened dairy concentrate which can be made from readily available raw materials.

It is thus an object of this invention to provide a shelf stable condensed sweetened dairy concentrate and a method of making a shelf stable condensed sweetened dairy concentrate from raw materials which are readily available items of commerce.

Desirably, a method is provided which provides mixing together readily available raw materials to make a blend, evaporating water from the blend, and recovering the processed blend as the concentrate.

Desirably, too, any sandiness in the concentrate is eliminated by controlling the size of lactose crystals formed during the processing, by seeding the evaporated blend.

The invention aims to provide a concentrate having more than 8% by weight NFMS with the concentrate being perceived as non-sandy.

The invention also aims to provide a shelf stable sweetened dairy concentrate that can be used to provide all the fat needed in any dairy desert mix having a fat/sugar ratio up to and including 1/1.

A desired method of making a dairy concentrate is gentle on the blend being processed, whereby desirable flavor and texture properties of fresh cream and fresh milk are preserved.

Another object of the invention is to provide a method of making a versatile frozen dairy desert mix by making a shelf stable concentrate adapted to being reconstituted to provide all the fat needed to make a wide range of dairy desert mixes having fat/sugar ratios up to 0.85/1, preferably up to 1/1, and subsequently selecting at will the dairy desert mix formula to be used.

Some of the objects are attained in a method of making a shelf stable condensed sweetened dairy concentrate. The method comprises the steps of mixing together fat and non fat milk solids, including a fresh dairy component, and sugar to make a blend thereof; then processing and thereby condensing the blend by raising its temperature and evaporating water from the blend, thereby increasing the concentration to at least about 70%, preferably about 70% to about 82%, by weight total solids; and recovering the processed blend as the shelf stable condensed sweetened cream concentrate. The concentrate generally, comprises about 15% to about 37% by weight fat, about 4% to about 17% by weight non fat milk solids, and sugar in an amount high enough that there is no deleterious affect related to growth of pathogenic organisms based on activity internal to the concentrate.

The method preferably comprises selecting, as the fresh dairy component, a combination of fresh cream and fresh milk.

The mixing step preferably includes selecting, as the fresh cream, a cream having about 30% to about 50% fat.

The method preferably includes, during the processing, cooling the blend whereby the blend becomes supersaturated with lactose; and seeding the supersaturated blend with seed crystals, preferably lactose seed crystals, in sufficient quantity to effect crystallization of lactose and to thereby control the size of lactose crystals so grown, such that the resulting lactose crystals are small enough that the concentrate produced is perceived as non-sandy.

The condensing is preferably carried out in a multiple effect falling film evaporator. The blend is preferably fore warmed by gradually raising the temperature of the blend to about the evaporation temperature over a period of at least about 5 minutes, preferably at least about 15 minutes.

The processing preferably includes flash cooling the blend through an expansion orifice into a vacuum chamber.

Some objects are achieved in an post-evaporator seeded shelf stable condensed sweetened dairy concentrate, comprising about 15% to about 37% by weight fat; about 9% to about 17% by weight non fat milk solids; and sugar in an amount high enough that there is no deleterious affect related to growth of pathogenic organisms based on activity internal to the concentrate, whereby the condensed sweetened dairy concentrate is perceived as non-sandy.

The concentrates of this invention are preferably made from a blend which includes commercially available fresh cream (namely cream having about 30% to about 50% fat) and non fat milk solids. In most preferred embodiments, the weight ratio of fat/sugar in the concentrate is at least 0.85/1, preferably at least 1/1.

In contemplation of sugar serving as a preservative such that there is no deleterious affect related to growth of pathogenic organisms based on activity internal to the concentrate, the ratio of sugar/(sugar+water) is preferably at least about 0.57/1.

Using the methods of the invention, concentrates are produced which contain more than 8% by weight non fat milk solids, and are still perceived as non-sandy.

In some embodiments, some of the fat used as a raw material in making the concentrate can be in a form other than fresh dairy fat. But for purposes of especially superior flavor, it is preferred that at least 50% of the fat, preferably all of the fat used as a raw material in making the concentrate, be fresh dairy fat, as supplied by fresh cream.

In some embodiments, it is preferred that the concentrate comprise about 15% to about 20% by weight fat, about 9% to about 14% by weight non fat milk solids, and about 36% to about 48% by weight sugar.

In other embodiments, the concentrate preferably comprises about 22% to about 36% by weight fat.

Condensed sweetened dairy concentrates of the invention having about 15% to about 37% by weight fresh dairy fat and the recited sugar component are perceived as non-sandy over the entire range of non fat milk solids, including those which have weight ratio of fat/sugar in the concentrate of at least 0.85/1.

A simple expression of the condensed sweetened dairy concentrates of the invention contemplates the concentrate comprising fat, non fat milk solids, and sugar, the concentrate having total solids of at least about 70%. The concentrate is preferably made with fresh cream having up to about 50% fat, the concentrate having a fat/sugar ratio of at least 0.85/1, and enough sugar that there is no deleterious affect related to growth of pathogenic organisms based on activity internal to the concentrate.

When the fat/sugar ratio is at least 0.85/1, the preferred compositions are about 30% to about 37% by weight fat, about 7% to about 17% by weight non fat milk solids, and about 30% to about 37% by weight sugar.

The invention also comprehends a method of making a frozen dairy desert mix. In one family of embodiments, the method comprises the steps of making a shelf stable condensed sweetened cream concentrate comprising fresh dairy fat, NFMS, and sugar, from fresh cream having no more than 50% fat, the concentrate having at least 70% by weight total solids, a fat/sugar ratio of at least 0.85/1, and enough sugar that there is no deleterious affect related to growth of pathogenic organisms based on activity internal to the concentrate; subsequently selecting at will a dairy desert mix formula having a fat/sugar ratio up to 0.85/1; and making the dairy desert mix using the selected formula, by mixing ingredients of the formula, but not fat, with the concentrate.

In some embodiments, the method includes making the concentrate with a fat/sugar ratio of 1/1, whereupon one can subsequently select the mix formula from among formulas having fat/sugar ratios up to 1/1.

In another family of embodiments of the method of making frozen dairy desert mix, the method comprises using fresh cream having no more than 47% fat, the concentrate having a fat/sugar ratio of at least 0.67/1; subsequently selecting at will a dairy desert mix formula having a fat sugar ratio up to 0.67/1; and making the dairy desert mix using the selected formula, by mixing ingredients of the formula, but not fat, with the concentrate. In this family of embodiments, the concentrate preferably comprises about 24% to about 37% by weight fat, about 7% to about 17% by weight non fat milk solids, and about 32% to about 45% by weight sugar.

The invention will now be described in more detail by way of example with reference to the accompanying drawings in which the sole figure is a schematic diagram showing the flow of materials through the processing steps employed in practising embodiments of the invention.

DETAILED DESCRIPTION OF THE ILLUSTRATED EMBODIMENTS

The basic problem addressed in this invention is that of providing a high quality shelf stable substitute product for fresh dairy cream. The substitute product should be highly concentrated so it is economical to ship. But it should be liquid and pumpable, so it can be handled mechanically. When reconstituted, or used in a reconstituted product, it should provide flavor and texture characteristics equivalent to those of fresh cream.

None of the substitute cream products known to the inventors (e.g. butter, butter oil, and plastic cream, etc.) satisfy the desired flavor and texture parameters. In addition, Bell and Tamsma acknowledge that their concentrate undergoes a flavor change.

Looking now to the processes of the prior art, butter, butter oil, and plastic cream are all products made by starting with only cream, or at most other materials in very minor amounts, and processing the cream to thereby increase the fat content. The resulting product is derived almost exclusively from cream. Such products contain little NFMS, and minimal if any sugar.

Bell and Tamsma start with a very heavy cream (60% - 70% fat) and mix in non fat dry milk and sugar. The processing merely amounts to mixing the ingredients together, heat treating a first time, packaging, and heating a second time (but not evaporating), to increase the viscosity of the final concentrate. The concentrate can be homogenized, instead of heating, to increase viscosity. Bell's resulting viscosity is 25,000 centipoise.

By contrast, in this invention, we use, as a raw material, readily available commercial grades of dairy products which have, or can be reconstituted to closely approximate, the flavor and texture characteristics of fresh cream, fresh whole milk, or fresh skim milk, as appropriate. Thus, we can use as raw materials fresh cream, fresh whole milk, fresh skim milk, sweetened condensed skim milk, and sweetened condensed whole milk. Where we use fresh cream, which is preferred, the cream should contain at least 30% fat in order to properly utilize the efficiency of modern cream separators, while preserving the superior flavor and texture qualities of fresh cream. A commonly available such cream contains 36% fat and about 5% non fat milk solids. The higher the fat content, the lower the NFMS. Up to about 50% fat is acceptable, though we prefer to use cream having no more than about 47-48% fat. Above that range, it is difficult to maintain the cream in a stable condition wherein it does not separate out of solution, does not rapidly turn rancid, and is not degraded in its texture and flavor when processed.

With the cream, we mix fresh whole milk and sugar, to make a blend thereof. Whole milk typically contains about 3.7% fat and 8.7% non fat milk solids. While the sugar can be added in a variety of forms, we prefer to use sucrose in a 67.5% solids solution in water.

A typical such blend, comprising overall 31% solids and 69% water, is

| 55% | Whole milk, at 3.7% fat, 8.7% NFMS. |
| 22.5% | Cream at 36% fat; |
| 22.5% | Liquid Sucrose, at 67.5% Sucrose. |

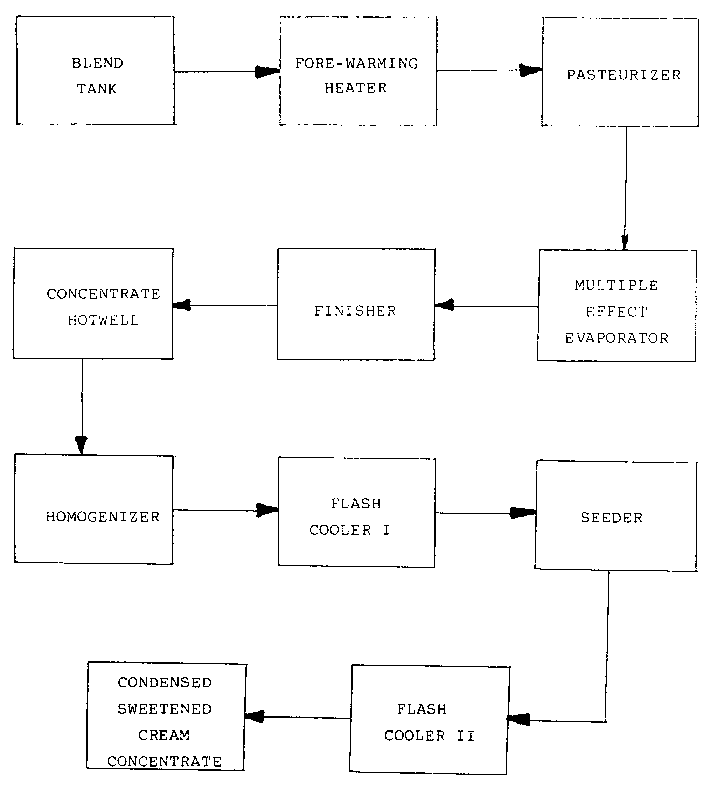

The flow of materials through our process is generally illustrated by FIGURE 1. The cream, the milk, and the sugar are mixed together in the Blend Tank to form a uniform blend, and then transported to the Fore Warming Heater.

In the Heater, the blend is gradually heated (fore warmed) over a period of at least about 5 minutes, and preferably over a period of at least about 15 minutes, to or near a typical evaporation temperature, e.g. 180 degrees F. The extended fore warming time avoids contacting any of the elements of the blend with severely hot heating surfaces. Thus, the fore warming is thermally gentle on the blend.

From the Fore Warming Heater, the blend goes to a Pasteurizer where it is raised to a higher temperature such as 190 degrees F. for e.g. 25 seconds, to pasteurize the blend.

The blend then goes through a Multiple Effect Falling Film Evaporator. In the Evaporator, water is evaporated at mild evaporation conditions which subject the blend to only gentle thermal treatments. By using mild evaporator conditions, the flavor and texture of fresh cream are not degraded in the Evaporator.

In the Evaporator, the blend first passes through the Evaporator Effects, where primary water removal takes place at typically 180 to 130 degrees F. From the Evaporator, the blend goes to the Finisher where the final evaporative concentration takes place at about 150 degrees F. From the Finisher, the blend goes to the Concentrate Hot Well, where the evaporated blend is held and agitated for an average dwell time of about 10 - 15 minutes while the blend reaches an internal equilibrium with itself.

From the Concentrate Hot Well, the evaporated blend goes to the Homogenizer and is homogenized at a low pressure drop, preferably 400 - 1000 psi. From the Homogenizer, the blend goes to Flash Cooler I where it passes through an expansion orifice and is rapidly cooled by the heat of vaporization of flashed off vapor, to a temperature of about 100 - 110 degrees F.

At this lower temperature, the evaporated blend is supersaturated with lactose, a component of the NFMS. The lactose has been found to have only limited solubility in the evaporated blend, whereby if not controlled, it might precipitate out of the blend with the effect that the resulting concentrate would be perceived, by an objective taster, as sandy.

Bell '485 reports that his concentrate is sandy when the NFMS is "8%, and even somewhat less." We avoid the tendency to develop a "sandy" property in our concentrate by seeding the evaporated blend with lactose seed crystals after the blend has passed out of Flash Cooler I and into the Seeder.

The Seeder is a flow-through tank with good agitation. Once the seed crystals are mixed into the blend, the lactose precipitates onto the seed crystals rapidly, whereby crystal growth does not depend on the dwell time in the Seeder Tank so much as it depends on good agitation/mixing to get the seed crystals thoroughly distributed in the blend.

As an example, we add to the evaporated blend 30 grams of lactose seed crystals per 100 pounds of the condensed sweetened cream concentrate which we expect to recover from the process. The lactose seed crystals are generally -325 mesh Standard Screen size (National Bureau of Standards). Suitable such lactose crystals are available as "Refined Edible Lactose, #307," from Wisconsin Dairies Company, Baraboo, Wisconsin, USA.

The seed crystals serve as nuclei for crystallizing the supersaturated lactose out of the evaporated blend. The number of crystals which grow during precipitation of the lactose out of the blend is generally a function of the number of seed crystals used. Generally, each seed crystal can serve as the nucleus of a crystal being grown during precipitation. Thus, the number of lactose crystals which grow during precipitation is related to the number of seed crystals used. Since the amount of lactose in the blend is fixed, the more seed crystals we add to the blend, the more we limit the ultimate size of the crystals which grow during precipitation of the lactose crystals.

According to the text Condensed Milk and Milk Powder, Hunziker, 1946, page 165, the perception of "sandiness" in sweetened condensed whole milk is primarily a function of crystal size. Defining crystal size in terms of volume and number of crystals per cubic millimeter, the sandiness characterization as set forth in Hunziker is illustrated in Table 3.

## Table 3

| N | V | Sandiness |
|---|---|---|
| 400,000 | $0.177 \times 10^{-6}$ | Excellent |
| 300,000 | $0.236 \times 10^{-6}$ | Good |
| 200,000 | $0.363 \times 10^{-6}$ | Slight, pasty |
| 150,000 | $0.472 \times 10^{-6}$ | Pasty |
| 100,000 | $0.707 \times 10^{-6}$ | Fine Mealy |
| 50,000 | $1.414 \times 10^{-6}$ | Mealy |
| 25,000 | $2.838 \times 10^{-6}$ | Fine Sandy |

N = Number of crystals per cubic millimeter.
V = Average volume of individual crystal in mm.$^3$

By seeding the evaporated blend after evaporation of water has been completed in the Evaporator and Finisher, as above, we obtain a cream concentrate which provides excellent taste characteristics. Our cream concentrate is routinely perceived as being non-sandy. Accordingly, by seeding the evaporated blend, we ensure that the number of crystals is large enough that average crystal size will not be so large that the product will be perceived as sandy.

Materials other than lactose can be used as the seed crystals. Now that we have disclosed the use of the seeding step, those skilled in the art can readily select other food-grade materials which can serve as nuclei on which the lactose can crystallize.

From the Seeder, the evaporated blend passes to Flash Cooler II where it, much like in Flash Cooler I, passes through a second expansion orifice, and is thereby flash cooled to about 80 degrees F.

Some additional concentration of the blend takes place in Flash Coolers I and II, as the cooling is effected by carrying off of heat of vaporization in the vapors discharged from the Flash Coolers. The Total Solids of the blend is believed to be increased about 1% in each of the Flash Coolers.

The evaporated, seeded blend, when so cooled comprises the condensed sweetened cream concentrate of the invention. The concentrate is then ready to be packaged, or placed into tank storage.

The concentrate so recovered contains about 70% to about 82% solids, and conversely about 18% to about 30% water. The concentrate has an initial Brookfield viscosity of about 5000 to about 20,000 centipoise at 70 degrees F., and is shelf stable at ambient temperature. It retains the high quality texture and flavor characteristics of fresh cream. A typical concentrate obtained from the above recited typical blend of 55% whole milk, 22.5% cream (36% fat), and 22.5% sugar contains 24% fat, 15% NFMS, and 36% sugar, for a total solids content of 75%.

The fat/sugar ratio in the concentrate should be large enough to supply, from the concentrate, all the fat needed in the end product, without overloading with sugar the end product (e.g. dairy frozen desert mix) made with the concentrate. Generally, a manufacturer of e.g. dairy desert mixes will want all the fat to be provided by the cream concentrate. So generally, the fat/sugar ratio in the cream concentrate is at least as large as the fat/sugar ratio in the dairy desert mix formula.

It is not necessary to this invention to provide in the concentrate the same fat/sugar ratio as in the (e.g. dairy desert) mix formula. Rather, the object is to provide all the fat without supplying excess sugar. The above concentrate having 24% fat and 36% sugar has a fat/sugar ratio of 0.67/1. Referring to Table 1, this cream concentrate meets or exceeds the typical fat/sugar ratios for Milk Shake, Soft Serve, and Ice Cream mixes. It does not satisfy the typical (1/1) fat/sugar ratio of Premium Ice Cream. Thus, this concentrate could be used to provide all the fat in a mix for Ice Cream, Soft Serve, or Milk Shakes.

The preservative character of the sugar depends on the ability of the sugar to tie up the water such that the osmotic pressure is high enough that there is no deleterious affect related to growth of pathogenic organisms based on activity internal to the concentrate. The ability of the sugar to control osmotic pressure, and thus growth of pathogenic organisms, is related to the ratio of sugar/(sugar+water). Others (e.g. Bell) have reported a minimum acceptable sugar/(sugar+water) ratio of 0.60. With our cream concentrates, generally a sugar/(sugar+water) ratio of about 0.57 is high enough that micro-organisms do not cause any deleterious affect. The sugar (sucrose is preferred; other sugars may be used) is uniformly held in the concentrate up to about 0.65 sugar/(sugar+water). In some products, the sugar can be retained acceptably at higher sugar/(sugar+water) ratios. The upper limit on each product is readily determined by testing samples of the specific product formulation.

The present decisive test of whether a food product is shelf stable, and thus need not be refrigerated, is the test for "Water Activity." "Water Activity" is based on the partial pressure of water vapor of the product. A "Water Activity" test of 0.91 or less is considered safe from most microbial activity. A comparison of the sugar/(sugar+water) ratio to the Water Activity test results for typical known products is given in Table 4 following.

EP 0 626 136 A2

Table 4

| Product No. | Sugar/(Sugar+Water) | Water Activity |
|---|---|---|
| 1 | 0.685/1 | 0.87 |
| 2 | 0.583/1 | 0.86 |
| 3 | 0.647/1 | 0.86 |
| 4 | 0.609/1 | 0.85 |
| 5 | 0.609/1 | 0.86 |
| 6 | 0.645/1 | 0.84 |
| 7 | 0.720/1 | 0.76 |
| 8 | 0.590/1 | 0.89 |
| 9 | 0.636/1 | 0.85 |

The sugar requirement is based on the amount of water in the concentrate. For reasons of economic efficiency, we prefer to use reduced amounts of sugar in the concentrate, while still obtaining the preservative effect of the sugar. Further, as the sugar content is increased above 45%, it becomes more and more difficult to prevent the sugar from crystallizing out of the concentrate. Accordingly, in most cases, the concentrate includes no more than 45% by weight sugar.

By seeding the evaporated blend in the Seeder, we avoid the sandiness taught by Bell, and thus increase the capacity of the blend to retain non fat milk solids, up to about 17% NFMS, or the point where the concentrate tends to gel, somewhere above 45% total milk solids (from both the cream and the whole milk).

Thus, we reduce the amount of water in the concentrate by adding NFMS in the Blend Tank, up to 17% based on the composition of the concentrate recovered, preferably also ensuring that the ratio of fat/NFMS (e.g. Table 1) is at least as great as that same ratio in the formula of the food product to be made from the concentrate.

The above stated ratios of fat/sugar and fat/NFMS can be violated where the user of the concentrate desires to add fat from another source, e.g. in the process of making the dairy desert mix. In some instances, non-dairy fat is added for reasons of economy, regional taste preferences, and the like. Such preferences and activity are intended to be within the scope of the invention as described and claimed herein.

Similarly, fats other than fresh dairy cream (e.g. butter, butter oil, or vegetable fat) can be used to make our concentrates in place of some or all of the fresh cream. But our concentrate will always have, as a major ingredient of the mixture in the Blend Tank, either fresh non fat milk solids or fresh dairy fat, or both.

Where ingredients other than fresh dairy fat or fresh non fat milk solids are used in making our concentrate, the properties of the concentrate are degraded accordingly, in relationship to the "other" ingredients used in place of fresh dairy fat or fresh NFMS.

The general range of compositions for the condensed sweetened cream concentrates of our invention is expressed as

| | |
|---|---|
| 15% - 37% | Fat |
| 4% - 17% | NFMS |
| 70% - 82% | Total Solids |

Sugar/(Sugar+Water) = generally at least about 0.57/1.

Where fat content is less than about 20% and sugar content is greater than 45%, NFMS is at least about 9%. Where the fat content is at least 20%, the sugar content can be as high as about 48%, and NFMS can be as low as 4%, so long as the NFMS content is high enough to keep the fat suspended uniformly throughout the concentrate. Where sugar content is no more than about 45%, fat content can be as low as 15% and NFMS can be as low as 4%.

The low end of the fat range approaches, but is greater than, the amount of fat in sweetened condensed whole milk. The high end of the fat range generally corresponds with a physical limit on the ability to pump the

9

concentrate.

The low end of the NFMS range generally represents the amount of NFMS required to keep cream emulsified in the blend, such that the cream does not separate out before the concentrate can be used in routine commerce. The high end of the NFMS range generally represents a recognition that higher levels of fat are generally preferred over higher levels of NFMS, and that controlling sandiness becomes more difficult as the absolute quantity of lactose in the concentrate is increased.

The low end of the sugar range is controlled by the sugar/(sugar+water) ratio required to provide the shelf stable characteristic. The high end recognizes that, as sugar content rises above 45%, it is increasingly more difficult to maintain the sugar as a liquid, without crystallization of sugar out of the composition. Concentrate compositions having greater than 48% sugar are generally not predictably stable. Thus, some such production lots will exhibit formation of sufficient sugar crystals to noticeably degrade the desired creamy texture of the product.

The low end of the Total Solids range represents the dependence on the sugar/(sugar+water) ratio and the preference to avoid excessive use of sugar. The low end of the sugar/(sugar+water) ratio is only a secondary indicator of ultimate shelf stability, with the ultimate analytical test being the Water Activity test. Thus, the sugar/(sugar+water) ratio can, for some concentrate compositions, be slightly below 0.57.

The high end of the Total Solids range represents the general limit of the ability to maintain the concentrate in liquid form, and conversely to avoid gelling of the concentrate in the processing equipment.

Within these compositional parameters, the higher end of the range of fat contents is generally preferred over the lower end of the range for frozen dairy desert mixes, because of the desire to provide a shelf stable dairy concentrate containing a large amount of fat. Thus, a preferred lower limit for the fat range is about 26%, in some cases as low as 20%.

The preferred upper limit on the fat depends on the segment of the food industry being served. For example, in the candy industry, 26% fat is about the maximum amount needed. For the lower fat containing products in the frozen dairy desert mix industry, about 24% fat is all that is needed. Finally, for frozen dairy desert mixes which have high fat/sugar ratios, e.g. 0.85/1 to 1/1, the fat component of the concentrate is preferably about 34% to 37%.

Accordingly, for the candy industry, the concentrate is preferably about 15% to about 26% fat. For dairy desert mixes except premium ice cream, a preferred range of fat is about 15% to about 24%. For premium ice cream, the preferred range is up to 37% fat.

Considering the need for sugar to make the concentrate shelf stable, considering the need for NFMS to emulsify the fat, and considering the above ratios required by the several dairy desert formulas, a single universal cream concentrate can be used to make any of the frozen dairy desert mixes represented in Table 1 if the concentrate satisfies the approximate formula

| | |
|---|---|
| 30 - 37% | Fat |
| 7 - 17% | NFMS |
| 30 - 37% | Sucrose |

These universal cream concentrates can readily be made with cream having no more than 50% fat, preferably no more than 47% fat.

Thus, the manufacturer of frozen dairy desert mixes can realistically expect to stock only one concentrate, yet can subsequently select, at will, which type of frozen dairy desert mix (e.g. which formula) is to be made from the single stocked concentrate, long after the concentrate is made. The desert mix manufacturer's process will simply vary the amount of sugar and NFMS (along with other ingredients) added to the concentrate in order to satisfy the given formula, once the fat requirement is satisfied by the concentrate.

If the mix manufacturer is willing to forego the option of making premium ice cream, then a nearly universal single cream concentrate can be used if it satisfies the formula

| | |
|---|---|
| 24 - 37% | Fat |
| 7 - 17% | NFMS |
| 32 - 45% | Sucrose |

These nearly universal cream concentrates can readily be made with cream having no more than 47% fat.

In making frozen dairy desert mixes in which all the fat is to be supplied by the cream concentrate of this invention, the mix is made by mixing with the cream concentrate the several ingredients of the formula to the extent they are not supplied by the cream concentrate. Because the cream concentrate usually is specified to provide the entire fat requirement, in most cases enough of the concentrate will be used that no other fat will be needed for mixing with the cream concentrate.

In most cases, once the fat content is tentatively determined, the relative amounts of NFMS and sugar can be selected from a range of possibilities. In order to obtain the high total solids in the concentrate, we prefer to use NFMS (a higher value ingredient) where possible in place of sugar (a lower value ingredient), so long as the preservative requirements for sugar are met. Thus, the lower end of the preferred NFMS range is preferably higher, such as 7%, with 9% being even more preferred. The 8% upper limit taught by Bell is now easily surpassed when we seed the evaporated blend. On the high end of the NFMS, we prefer to not exceed 14% in order that process controls can be more relaxed.

The following Examples are expressed in terms of batch size that produces 1000 pounds of concentrate. The actual batch size, of course, varies according to the size and capabilities of the available equipment.

EXAMPLE 1

432 pounds of 36% cream having 5% NFMS, 684 pounds of whole milk (3.7% fat, 8.7% NFMS), and 667 pounds of liquid sucrose (67.5% solids in water) are mixed thoroughly to make a uniform blend. The blend is fore warmed, by gradually raising the temperature to 180 degrees F. over a period of 15 minutes. Then the temperature is quickly raised to 190 degrees F. and held there for 25 seconds to pasteurize the blend. The blend then passes to a multiple effect falling film evaporator where water is evaporated at 180 to 130 degrees F. Final concentration is accomplished in the Finisher at 150 degrees F. The evaporated blend is internally equilibrated in the Concentrate Hot Well for about 15 minutes. The evaporated blend is then homogenized at 400 psi in the Homogenizer, and flash cooled to a temperature of 105 degrees F. in Flash Cooler I. The blend is then seeded with 300 grams of lactose crystals (#307, from Wisconsin Dairies Company) with good mixing to quickly disperse the seed crystals. The post-evaporator seeded blend dwells in the Seeder tank for an average of about 1 - 2 minutes, which ensures that the lactose seed crystals are thoroughly mixed into the blend. The blend is then flash cooled to 80 degrees F. and the evaporated blend is recovered (1000 pounds) as a condensed sweetened cream concentrate of this invention.

The concentrate so recovered is represented by the formula:

| 18% | Fat |
| --- | --- |
| 8% | NFMS |
| 45% | Sugar |
| 71% | Total Solids |

The concentrate has an initial viscosity of about 5000 centipoise. It is smooth and creamy, and perceived as being non-sandy. Its flavor appropriately represents the flavor of a fresh cream product. Its texture represents the texture of a fresh cream product, allowing for the higher solids content, and thus the higher viscosity. The concentrate gives no indication of any degrading of either the flavor or the texture of fresh cream. Its Water Activity test indicates that it is shelf stable.

After storage for 90 days at 70 degrees F., the concentrate shows no sign of separation or of other deterioration; confirming by storage test that it is indeed shelf stable.

EXAMPLE 2

522 pounds of 36% cream having 5% NFMS, 1444 pounds of whole milk (3.7% fat, 8.7% NFMS), and 535 pounds of liquid sucrose (67.5% solids in water) are mixed and otherwise processed as in EXAMPLE 1. The condensed sweetened cream concentrate (1000 pounds) recovered is represented by the formula:

| 24% | Fat |
|-----|-----|
| 15% | NFMS |
| 36% | Sucrose |
| 75% | Total Solids |

The properties of this concentrate are similar to the properties of the concentrate of EXAMPLE 1, relative to viscosity, flavor retention, and texture. Water Activity test is 0.89, and is represented as Product No. 8 in Table 4.

After storage for 60 days at 70 degrees F., the concentrate shows no sign of separation or of other deterioration; confirming by storage test that it is indeed shelf stable.

Brookfield viscosity (RV 4 at 5 rpm, 70 degrees F.) is 8500 centipoise right after the product was made. At 9 days, viscosity is 11,200 centipoise. At 16 days, viscosity is 9600 centipoise. At 66 days, it is 13,400.

EXAMPLE 3

910 pounds of 36% cream having 5% NFMS, 650 pounds of whole milk (3.7% fat, 8.7% NFMS), and 520 pounds of liquid sucrose (67.5% solids in water) are mixed and otherwise processed as in EXAMPLE 1. The condensed sweetened cream concentrate (1000 pounds) recovered is represented by the formula:

| 35% | Fat |
|-----|-----|
| 10% | NFMS |
| 35% | Sucrose |
| 80% | Total Solids |

The properties of the concentrate are similar to the properties of the concentrate of EXAMPLE 1, relative to flavor retention and texture. Initial viscosity is 19,000 centipoise. Water Activity is 0.85 and is represented as Product No. 9 in Table 4.

EXAMPLE 4

The concentrate of EXAMPLE 2 is used to make ice cream mix having the following formula:

| 10% | Fat |
|-----|-----|
| 12% | NFMS |
| 15% | Sugar |

The mix is made as follows. 41.67 pounds of the shelf stable condensed sweetened cream concentrate are mixed with 5.75 pounds of NFMS and 52.58 pounds of water, plus nominal amounts of stabilizers, flavorings, etc., to make 100 pounds of frozen dairy desert mix having the above formula. The mix is readily frozen and otherwise processed to make a high quality ice cream.

In this EXAMPLE (4), all of the fat and all of the sugar were supplied by the cream concentrate. In many cases, it is necessary to add some sugar. In most cases, the formulation of the cream/dairy concentrate is specified such that no other fat need be added when the dairy concentrate is reconstituted to make the frozen dairy desert mix.

EXAMPLE 5

The concentrate of EXAMPLE 3 is used to make ice cream mix having the following formula:

| | |
|---|---|
| 10% | Fat |
| 10% | NFMS |
| 16% | Sugar |

The mix is made as follows. 45.71 pounds of shelf stable condensed sweetened cream concentrate are mixed with 5.43 pounds of NFMS and 48.86 pounds of water, plus nominal amounts of stabilizers, flavorings, etc., to make 100 pounds of frozen dairy desert mix having the above formula. The mix is readily frozen and otherwise processed to make a high quality premium ice cream.

The above recited fat/sugar ratio of 1/1 is not an upper limit. Rather, it illustrates the feasibility of using a single dairy concentrate of the invention to make food products having different fat/sugar ratios, including up to 1/1. EXAMPLE 3 illustrates that a 1/1 concentrate can be made. Fat/sugar ratios of 1.1/1, and preferably up to 1.25/1 are contemplated. The following formulation represents an illustrative concentrate of the invention having a fat/sugar ratio greater than 1/1.

| | |
|---|---|
| 37% | Fat |
| 7% | NFMS |
| 32% | Sucrose |

While the concentrates described herein were prepared using cow's milk, milk from other animals can be used and processed in the methods, concentrates, and food products described herein, and thus is included within the scope of the invention, as claimed.

The invention herein has been illustrated by focusing on the frozen dairy desert mix industry. The shelf stable cream concentrate disclosed is, however, applicable wherever a shelf stable sweetened cream concentrate can appropriately be used. Thus it can be used in any sweetened food product which uses cream-based ingredients. These certainly include products of the candy industry and the baking industry. Other applications will be obvious to those skilled in the making of food products.

Those skilled in the art will now see that certain modifications can be made to the apparatus, methods, and compositions herein disclosed with respect to the illustrated embodiments, without departing from the spirit of the instant invention. And while the invention has been described above with respect to the preferred embodiments, it will be understood that the invention is adapted to numerous rearrangements, modifications, and alterations, and all such arrangements, modifications, and alterations are intended to be within the scope of the appended claims.

## Claims

1. A method of making a shelf stable condensed sweetened dairy concentrate, said method comprising the steps of:
   (a) mixing together and thereby making a blend of, fat and non fat milk solids including a fresh dairy component, and sugar;
   (b) subsequent to step (a), processing said blend and thereby condensing said blend by raising the temperature of said blend to an evaporation temperature and evaporating water from said blend, thereby raising the concentration of said blend to at least 70% by weight total solids; and
   (c) recovering the processed blend as said shelf stable condensed sweetened dairy concentrate, said concentrate having at least 70% by weight total solids, and comprising about 20% by weight to about 37% by weight fat, about 4% by weight to about 17% by weight non fat milk solids, and sugar in an amount high enough that there is no deleterious affect related to growth of pathogenic organisms based on activity internal to said concentrate,
   said fresh dairy component being, for instance, fresh cream or fresh milk or a combination of fresh cream and fresh milk.

2. A method according to Claim 1, said method comprising producing, as said concentrate, a concentrate having a weight ratio of fat/sugar of at least 0.85/1.

3. A method according to Claim 1 or Claim 2, said method comprising selecting, as said fresh cream, a cream having about 30% by weight to about 50% by weight fat.

4. A method according to any one of Claims 1-3, said method including fore warming said blend by gradually raising the temperature of said blend to about said evaporation temperature over a period of at least about 5 minutes, e.g. at least about 15 minutes.

5. A method according to any one of Claims 1-4, said method comprising, during step (b), cooling said blend whereby said blend becomes a supersaturated blend, supersaturated with lactose; and seeding said supersaturated blend with seed crystals in sufficient quantity to effect crystallization of lactose and to thereby control the size of lactose crystals so formed, such that the lactose crystals so formed are small enough that said condensed sweetened dairy concentrate so produced is perceived as non-sandy.

6. A method according to any one of Claims 1-5 and including formulating said shelf stable condensed sweetened cream concentrate such that said condensed sweetened cream concentrate so produced comprises at least 8% by weight non fat milk solids.

7. A method according to any one of Claims 1-6, said method including, during said processing, flash cooling said blend through an expansion orifice.

8. A method according to any one of Claims 1-7 and including controlling lactose crystal growth in said condensed sweetened cream concentrate such that said shelf stable condensed sweetened cream concentrate so produced is perceived as non-sandy.

9. A method according to any one of Claims 1- 8, said method comprising condensing said blend in a falling film evaporator.

10. A shelf stable condensed sweetened cream concentrate made according to a method of any one of Claims 1- 9.

11. A shelf stable condensed sweetened dairy concentrate made with raw materials including fresh dairy fat, non fat milk solids, and sugar, said shelf stable condensed sweetened dairy concentrate having at least about 70% by weight total solids, and sugar/(sugar+water) weight ratio of about 0.57/1 up to less than 0.60/1.

12. A shelf stable condensed sweetened dairy concentrate made with raw materials including fresh dairy fat, non fat milk solids, and sugar, said concentrate comprising at least about 20% by weight fat, and having at least about 70% by weight total solids, said concentrate having been made with fresh cream having up to 50% by weight fat, and enough sugar that there is no deleterious affect related to growth of pathogenic organisms based on activity internal to said concentrate.

13. A shelf stable condensed sweetened dairy concentrate made with raw materials including fresh dairy fat, non fat milk solids, and sugar, said concentrate comprising at least about 9% by weight non fat milk solids, and having at least about 70% by weight total solids, and enough sugar that there is no deleterious affect related to growth of pathogenic organisms based on activity internal to said concentrate.

14. A shelf stable condensed sweetened dairy concentrate made with raw materials including fresh dairy fat, non fat milk solids, and sugar, said concentrate comprising at least 15% by weight fat, at least 4% by weight non fat milk solids, sufficient sugar, up to 45% by weight, that there is no deleterious affect related to growth of pathogenic organisms based on activity internal to said concentrate, and having at least about 70% by weight total solids.

15. A shelf stable condensed sweetened dairy concentrate according to any one of Claims 11-14, said sweetened dairy concentrate having been made with a combination of fresh cream and fresh milk.

16. A shelf stable condensed sweetened dairy concentrate according to any one of Claims 12-15, said shelf stable condensed sweetened dairy concentrate having sugar/(sugar+water) weight ratio of at least about 0.57/1.

17. A shelf stable condensed sweetened dairy concentrate according to any one of Claims 11-16, at least 50% by weight of said fat being fresh dairy fat, said condensed sweetened dairy concentrate having been made

14

with a process including an evaporating step, and a seeding step after the evaporating step.

18. A shelf stable condensed sweetened dairy concentrate according to any one of Claims 11-17, said fresh dairy fat comprising cream having about 30% by weight to about 50% by weight fat.

19. A shelf stable condensed sweetened dairy concentrate according to any one of Claims 11-18, said concentrate having a weight ratio of fat/sugar of at least 0.85/1.

20. A shelf stable condensed sweetened dairy concentrate according to any one of Claims 11-19, said concentrate comprising about 4% by weight to about 17% by weight non fat milk solids.

21. A shelf stable condensed sweetened dairy concentrate as in Claim 11, said concentrate comprising sugar in an amount high enough that there is no deleterious affect related to growth of pathogenic organisms based on activity internal to said concentrate.

22. A shelf stable condensed sweetened dairy concentrate as in any one of Claims 11-21, said concentrate having been made with a process including making a blend of raw materials including said fresh dairy fat, and including a subsequent step of fore warming the blend by gradually raising the temperature of the blend to an evaporation temperature over a period of at least about 5 minutes, and thereby preserving flavor in said fresh dairy fat.

23. A shelf stable condensed sweetened dairy concentrate as in any one of Claims 11-22, said concentrate comprising about 20% by weight to about 37% by weight fresh dairy fat, and/or said concentrate comprising at least 8% by weight non fat milk solids.

24. A shelf stable condensed sweetened dairy concentrate as in any one of Claims 11-23, said concentrate having been prepared in a process including making a blend of raw materials including said fresh dairy fat and fresh non fat milk solids, evaporating the blend to obtain a liquid supersaturated with lactose, seeding the supersaturated liquid with lactose crystals and thereby precipitating lactose, and thereby controlling the size of lactose crystals so precipitated, and optionally said process includes flash-cooling the seeded liquid, whereby the resulting said condensed sweetened dairy concentrate is perceived as being non-sandy.

25. A shelf stable condensed sweetened dairy concentrate as in any one of Claims 11-24, said sweetened dairy concentrate comprising about 24% by weight to about 37% by weight fat, about 7% by weight to about 17% by weight non fat milk solids, and about 30% by weight to about 45% by weight sugar.

26. A shelf stable condensed sweetened dairy concentrate according to any one of Claims 11-25, said condensed sweetened dairy concentrate having been made with a combination of fresh cream having up to 50% by weight fat, and fresh milk.

27. A method of making a dairy desert mix, said method comprising the steps of:
    (a) making a shelf stable condensed sweetened cream concentrate comprising fresh dairy fat, non fat milk solids, and sugar, with fresh cream having no more than 50% and preferably no more than 48% by weight fat, said concentrate having at least 70% by weight total solids, enough sugar that there is no deleterious affect related to growth of pathogenic organisms based on activity internal to said concentrate, and a first fat/sugar ratio, e.g. at least 0.67/1;
    (b) after step (a), selecting at will one of at least two dairy desert mix formulas having second fat/sugar ratios up to as high as said first fat/sugar ratio; and
    (c) making said dairy desert mix using said selected formula, by mixing ingredients of said formula, but not fat, with said concentrate.

28. A method of making a dairy desert mix as in Claim 27, and including selecting, as ingredients for making said condensed sweetened cream concentrate, a combination of fresh cream and fresh milk.

29. A method of making a dairy desert mix as in Claim 27 or Claim 28, and including selecting, as an ingredient for making said condensed sweetened cream concentrate, cream having fresh dairy fat content of 30% by weight to 48% by weight.

30. A method of making a dairy desert mix as in any one of claims 27-29, and including making said condensed sweetened cream concentrate in step (a) to contain about 15% by weight to about 37% by weight fresh dairy fat, and/or including making said condensed sweetened cream concentrate in step (a) to contain about 4% by weight to about 17% by weight non fat milk solids, and/or including making said condensed sweetened cream concentrate in step (a) to contain at least 8% by weight non fat milk solids.

31. A method of making a dairy desert mix as in any one of claims 27-30, and including making said condensed sweetened cream concentrate in step (a) to contain 30% by weight to 37% by weight fat, 7% by weight to 17% by weight non fat milk solids, and 30% by weight to 37% by weight sugar.

32. A dairy desert mix made according to a method of any one of Claims 27- 31.

```
┌──────────────┐      ┌──────────────┐      ┌──────────────┐
│    BLEND     │─────▶│ FORE-WARMING │─────▶│  PASTEURIZER │
│     TANK     │      │    HEATER    │      │              │
└──────────────┘      └──────────────┘      └──────────────┘
                                                    │
                                                    ▼
┌──────────────┐      ┌──────────────┐      ┌──────────────┐
│  CONCENTRATE │◀─────│   FINISHER   │◀─────│   MULTIPLE   │
│   HOTWELL    │      │              │      │    EFFECT    │
└──────────────┘      └──────────────┘      │  EVAPORATOR  │
        │                                   └──────────────┘
        ▼
┌──────────────┐      ┌──────────────┐      ┌──────────────┐
│ HOMOGENIZER  │─────▶│    FLASH     │─────▶│   SEEDER     │
│              │      │   COOLER I   │      │              │
└──────────────┘      └──────────────┘      └──────────────┘
                                                    │
┌──────────────┐      ┌──────────────┐              │
│  CONDENSED   │◀─────│    FLASH     │◀─────────────┘
│  SWEETENED   │      │  COOLER II   │
│    CREAM     │      │              │
│ CONCENTRATE  │      └──────────────┘
└──────────────┘
```